# EUROPEAN PATENT SPECIFICATION

(11) **EP 2 902 459 B1**
(45) Date of publication and mention of the grant of the patent: **10.07.2019**
(21) Application number: 13841604.5
(22) Date of filing: 23.09.2013
(51) Int. Cl.: C09D 163/00, C08K 9/04, C08K 5/10, C08K 5/17

(54) **HEAT DISSIPATION PAINT COMPOSITION AND HEAT DISSIPATION STRUCTURE**
STRAHLUNGSFARBZUSAMMENSETZUNG UND STRAHLUNGSSTRUKTUR
COMPOSITION DE PEINTURE DE RAYONNEMENT ET STRUCTURE DE RAYONNEMENT

(30) Priority: 28.09.2012 KR 20120109475
(43) Date of publication of application: 05.08.2015
(73) Proprietor: Hanwha Chemical Corporation, Seoul 100-797 (KR)
(72) Inventor: JEON, Seong Yun, Daejeon 305-707 (KR); DO, Seung Hoe, Daejeon 305-768 (KR); LEE, Jin Seo, Yongin-si Gyeonggi-do 446-569 (KR)
(74) Representative: Alt, Michael
(86) International application number: PCT/KR2013/008491
(87) International publication number: WO 2014/051295

(56) References cited:
- KR-A- 20080 059 302
- KR-A- 20100 032 811
- KR-A- 20120 013 914
- KR-A- 20120 013 914
- KR-A- 20120 053 368
- KR-B1- 101 045 276
- KR-B1- 101 045 276
- KR-B1- 101 142 269

## Description

### [Technical Field]

The present invention relates to a heat dissipation paint composition and a heat dissipation structure as defined in the claims. More specifically, the present invention relates to a heat dissipation paint composition capable of forming a heat dissipation layer having excellent salt water resistance, coating film strength, adherence property, scratch resistance, or the like, together with excellent heat dissipation property, in various products, and a heat dissipation structure.

### [Background Art]

Recently, as a light emitting diode (LED) head lamp is increasingly applied to an automobile, or the like, a technical effort to decrease a temperature of the lamp has been conducted. In particular, an LED device is a semiconductor device which is significantly sensitive to a temperature, and problems such as decrease in lifespan and malfunction by an increase in a temperature during operation may occur seriously. Therefore, it is significantly required to suppress the increase in a temperature of the LED head lamp, and the like, to extend the lifespan, and to suppress malfunction.

Up to now, in order to suppress the increase in the temperature of the LED head lamp, and the like, heat dissipation property is realized through a fan between the lamp and a bracket in most cases. However, in the heat dissipation structure, the fan has a shorter lifespan than that of the lamp, and noise, dust, and frequent failure occur, such that the high-priced LED head lamp needs to be frequently replaced.

Accordingly, development in technology of extending the lifespan of the lamp by appropriately radiating heat generated around the LED head lamp, and the like, to suppress the increase in the temperature without using a mechanical structure such as a fan, or the like, has been continuously demanded.

Recently, in order to obtain the above-described effect, an effort of forming a heat dissipation structure such as a heat dissipation layer, or the like, by using a heat dissipation paint composition around the LED head lamp, and the like, has been attempted. However, the heat dissipation paint composition capable of forming the heat dissipation layer having excellent salt water resistance, coating film strength, adherence property, scratch resistance, or the like, together with excellent heat dissipation property so as to preferably realize the effect, has not been achieved properly yet.

### [Summary of Invention]

### [Technical Problem]

The present invention has been made in an effort to provide a heat dissipation paint composition capable of forming a heat dissipation layer having excellent salt water resistance, coating film strength, adherence property, scratch resistance, or the like, together with excellent heat dissipation property, in various products such as a light emitting diode (LED) head lamp, and the like.

The present invention has also been made in an effort to provide a heat dissipation structure such as a heat dissipation layer, or the like, having excellent salt water resistance, coating film strength, adherence property, scratch resistance, or the like, together with excellent heat dissipation property, obtained from the heat dissipation paint composition.

### [Solution to Problem]

An exemplary embodiment of the present invention provides a heat dissipation paint composition including: an epoxy resin; a curing agent; a carbon-based filler having a functional group including at least one selected from the group consisting of an amine group, an amide group, a carboxyl group and a hydroxyl group bound thereto; and a solvent.

Another embodiment of the present invention provides a heat dissipation structure including: an epoxy resin cured material having a cross-linked structure by a ring-opened epoxy group; and a carbon-based filler having a functional group including at least one selected from the group consisting of an amine group, an amide group, a carboxyl group and a hydroxyl group bound thereto.

Hereinafter, the heat dissipation paint composition and the heat dissipation structure according to an exemplary embodiment of the present invention will be described.

According to an exemplary embodiment of the present invention, the heat dissipation paint composition including: an epoxy resin; a curing agent; a carbon-based filler having a functional group including at least one selected from the group consisting of an amine group, an amide group, a carboxyl group and a hydroxyl group bound thereto; and a solvent is provided.

The heat dissipation paint composition may include the epoxy resin having at least one epoxy group at an end thereof, or the like; the curing agent; and the carbon-based filler having a specific functional group bound onto a surface, the specific functional group being capable of forming a hydrogen bond. If the heat dissipation paint composition is applied around products requiring heat radiation, such as an LED head lamp, and the like, and then is cured, the epoxy group in the epoxy resin may be ring-opened and interact with the curing agent to thereby form a cross-linked structure of the epoxy groups as shown in Reaction Formula 1 below. Therefore, the epoxy resin cured material and the heat dissipation structure such as the heat dissipation layer including the same, may be provided.

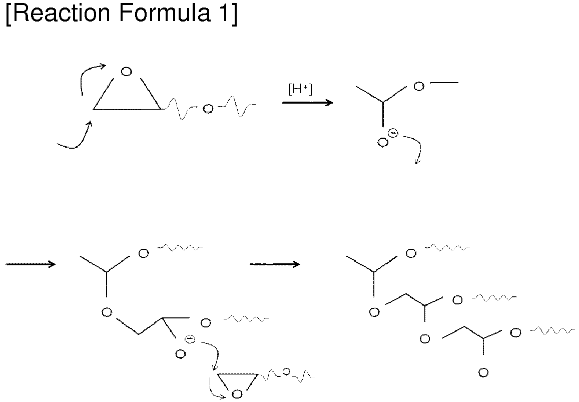

In particular, in the epoxy resin cured material having the heat dissipation structure, the carbon-based filler having the specific functional group bound onto the surface may be uniformly dispersed, and it may be considered that a hydrogen bond may be formed between the specific functional group of the carbon-based filler and oxygen derived from the epoxy group and included in a cross-linked structure. A chemical bonding structure in which the hydrogen bonds are formed is schematically represented by Reaction Formula 2 below:

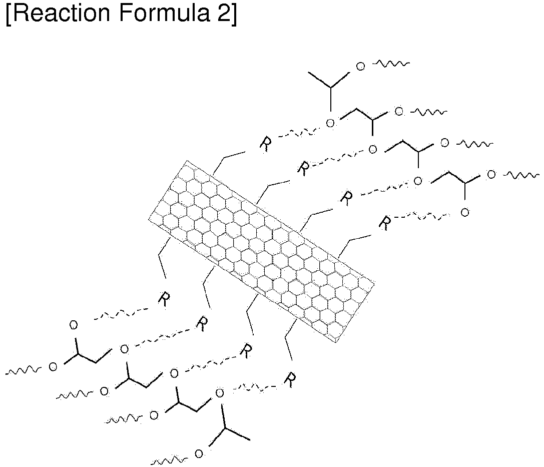

Due to the interaction between the carbon-based filler and the epoxy resin such as the formation of hydrogen bonds, in the heat dissipation structure such as the heat dissipation layer, or the like, the carbon-based filler may show more excellent compatibility with the epoxy resin and cured materials thereof, and may be more uniformly dispersed in the heat dissipation structure to provide excellent and uniform effects.

As a result, the heat dissipation structure obtained from the heat dissipation paint composition according to an exemplary embodiment may exhibit more excellent effects due to the carbon-based filler which is material having thermal conductivity and heat dissipation property to provide excellent heat dissipation property, and the heat dissipation structure such as the heat dissipation layer, or the like, may show improved general physical properties such as excellent salt water resistance, coating film strength, adherence property on a substrate, scratch resistance, hardness, and the like, due to excellent compatibility, and the like, between the epoxy resin and the carbon-based filler.

Therefore, by using the heat dissipation paint composition according to an exemplary embodiment of the present invention, heat generated from the light emitting diode (LED) head lamp effectively radiates without disposing mechanical heat dissipation structures such as a fan, and the like, around the LED head lamp, such that an increase in temperature may be suppressed, and as a result, the LED head lamp may have an improved lifespan. In addition, the heat dissipation paint composition according to an exemplary embodiment of the present invention may be used to provide the heat dissipation structure such as the heat dissipation layer having excellent heat dissipation property and other general physical properties in condensers, evaporators, engines, heaters, boiler pipes, communication equipments, motors, batteries, housing materials, electrode materials, semiconductor, game machines, displays such as OLED devices, mobile phones, home appliances, automobiles, construction, medical equipments, ship, airplane, aerospace equipment, military facilities and equipments, heat exchangers, or the like.

Meanwhile, in the heat dissipation paint composition according to the exemplary embodiment of the present invention, various curing agent components which are possible to cure the epoxy resin may be used as the curing agent. For example, imidazole-based curing agent may be used.

In addition, in the heat dissipation paint composition, the carbon-based fillers are any carbon-based fillers which have been known to exhibit heat dissipation property, thermal conductivity, and the like, for example, at least one selected from the group consisting of a single wall carbon nanotube, a double wall carbon nanotube, a multi-wall carbon nanotube, graphene, graphene oxide, a graphene nano plate, graphite, carbon black, and a carbon-metal complex. Further, the functional group bound to the carbon-based filler may be any functional groups including an amine group, an amide group, a carboxyl group or a hydroxyl group in a structure, the functional group may be bound directly or via a linker such as C1 to C20 alkylene, or the like, onto the surface of the carbon-based filler.

For example, the carbon-based filler having the functional group bound thereto may have a chemical structure represented by Chemical Formula 1 below: 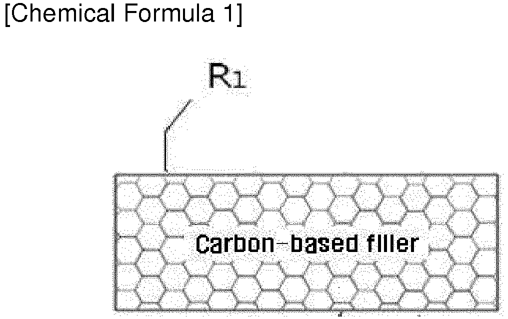 in Chemical Formula 1,
R₁ is at least one functional group bound to the carbon-based filler, is the same as each other or different from each other, and is selected from the group consisting of -R₂-NHR₃, -R₂-C(=O)-NHR₃, -R₂-C(=O)-OH, -R₂-OH, and - R₂-NH-C(=O)R₃,
R₂ is the same as each other or different from each other, and is a single bond or C1 to C20 alkylene, and
R₃ is the same as each other or different from each other, and is hydrogen or C1 to C20 alkyl.

As the carbon-based filler has the above-described structure, the heat dissipation structure formed from the heat dissipation paint composition according to the exemplary embodiment of the present invention may show more excellent heat dissipation property and compatibility to significantly improve physical properties thereof.

Meanwhile, in the heat dissipation paint composition according to the exemplary embodiment of the present invention, any solvents which are possible to appropriately dissolve each component may be used as the solvent. For example, the solvent may include at least one selected from the group consisting of a water-based solvent such as water, an alcohol-based solvent, a ketone-based solvent, an amine-based solvent, an ester-based solvent, an amide-based solvent, a halogenated hydrocarbon-based solvent, an ether-based solvent, and a furan-based solvent.

In addition, the heat dissipation paint composition may include the epoxy resin in an amount of 5 to 50 wt%; the curing agent in an amount of 0.1 to 20 wt%; the carbon-based filler having a functional group including at least one selected from the group consisting of an amine group, an amide group, a carboxyl group and a hydroxyl group bound thereto in an amount of 0.05 to 5 wt%; and the solvent in a residual amount, and within the range of these amounts, a property in which the composition is applied, the compatibility between the epoxy resin and the carbon-based filler, and the heat dissipation property by the carbon-based filler may be optimized, such that the heat dissipation structure formed by the composition may have more excellent properties.

Further, the composition according to an exemplary embodiment of the present invention may further include: general additives, for example, at least one additive selected from the group consisting of a dispersant, a leveling agent, a dispersion stabilizer, a pH adjusting agent, an anti-precipitation agent, a surfactant, a wetting agent, and a thickener, in addition to each above-described component.

As the dispersant among the additives, all of any dispersants which have been known to be usable to paint compositions or resin compositions including the carbon-based filler, and the like, may be used without specific limitation. Representative examples of the dispersant may include: a modified acrylate-based dispersant; a modified polyurethane acrylic copolymer dispersant; a polyacetal-based dispersant; an acrylic dispersant such as an acrylic acid, methyl methacrylate, alkyl(C1 to C10)acrylate, vinyl acrylate or 2-ethylhexyl acrylate; a polycarbonate-based dispersant; a styrene-based dispersant such as styrene or alpha methyl styrene; a polyester-based dispersant; a polyphenylene ether-based dispersant; a polyolefin-based dispersant; an acrylonitrile-butadiene-styrene copolymer dispersant; a polyarylate-based dispersant; a polyamide-based dispersant; a polyamide imide-based dispersant; a polyaryl sulfone-based dispersant; a polyether imide-based dispersant; a polyether sulfone-based dispersant; a polyphenylene sulfide-based dispersant; a polyimide-based dispersant; a polyether ketone-based dispersant; a poly benzoxazol-based dispersant; a poly oxadiazole-based dispersant; a poly benzothiazole-based dispersant; a poly benzimidazole-based dispersant; a polypyridine-based dispersant; a polytriazole-based dispersant; a polypyrrolidine-based dispersant; a poly dibenzofuran-based dispersant; a polysulfone-based dispersant; a polyurea-based dispersant; a polyurethane-based dispersant; a polyphosphazene-based dispersant; and the like, and a mixture containing two or more selected therefrom or a copolymer thereof may also be used.

In addition, as the leveling agent, known additives such as BYK series may be typically used, and various other leveling agents may be used. Further, as the dispersion stabilizer, an anionic surfactant, a cationic surfactant, a non-ionic surfactant, a wetting agent, a wetting-improving agent, or the like, may be used, and any known additives which are possible to stabilize dispersibility of the carbon-based filler, and the like, of other resin compositions or paint compositions may be used. All additives which are known in the art or which are commercially available may be used as each additive.

The above-described heat dissipation paint composition according to the exemplary embodiment of the present invention may be applied to any substrates such as a metal substrate such as an aluminum (Al) heat sink, a plastic substrate, a fiber substrate, or the like, with high adherence property, and may be applied to provide the heat dissipation structure such as the heat dissipation layer having excellent heat dissipation property and other general physical properties in condensers, evaporators, engines, heaters, boiler pipes, communication equipments, motors, batteries, housing materials, electrode materials, semiconductor, game machines, displays such as OLED devices, mobile phones, home appliances, automobiles, construction, medical equipments, ship, airplane, aerospace equipment, military facilities and equipments, heat exchangers, or the like, as well as the device such as LED head lamp, or the like as described above.

Meanwhile, according to another exemplary embodiment of the present invention, there is provided the heat dissipation structure formed from the above-described heat dissipation paint composition. The heat dissipation structure may include: an epoxy resin cured material having a cross-linked structure by a ring-opened epoxy group; and a carbon-based filler having a functional group including at least one selected from the group consisting of an amine group, an amide group, a carboxyl group and a hydroxyl group bound thereto. In the heat dissipation structure, the carbon-based filler may be more uniformly dispersed in the epoxy resin cured material, and in particular, due to excellent compatibility with the epoxy resin cured material, the carbon-based filler may be more uniformly dispersed to provide excellent properties. Therefore, the heat dissipation structure may have not only excellent heat dissipation property, but also improved general physical properties such as excellent salt water resistance, coating film strength, adherence property on a substrate, scratch resistance, hardness, and the like, due to excellent compatibility, and the like. It may be considered that these excellent properties are obtained due to the interaction between the functional groups bound to the carbon-based filler and oxygen derived from the epoxy group in the epoxy resin cured material through the hydrogen bonds, or the like.

The heat dissipation structure may be applied to various products such as condensers, evaporators, engines, heaters, boiler pipes, communication equipments, motors, batteries, housing materials, electrode materials, semiconductor, game machines, displays such as OLED devices, mobile phones, home appliances, automobiles, construction, medical equipment, ship, airplane, aerospace equipment, military facilities and equipment, heat exchangers, or the like, as well as the device such as LED head lamp, or the like as described above, and may show excellent heat dissipation property and other general physical properties, and may be the heat dissipation layer, and the like, formed from the above-described heat dissipation paint composition according to the exemplary embodiment of the present invention.

### [Advantageous Effects of Invention]

According to the present invention, it is possible to provide the heat dissipation paint composition capable of providing a heat dissipation structure having improved general physical properties such as excellent salt water resistance, coating film strength, adherence property on a substrate, scratch resistance, hardness, and the like, together with excellent heat dissipation property.

Therefore, by using the heat dissipation paint composition, heat generated from the light emitting diode (LED) head lamp effectively radiates without disposing mechanical heat dissipation structures such as a fan, and the like, around the LED head lamp, such that an increase in temperature may be suppressed, and therefore, the LED head lamp may have an improved lifespan.

In addition, the heat dissipation paint composition according to the present invention may be used to provide the heat dissipation structure such as a heat dissipation layer having excellent heat dissipation property and other general physical properties in condensers, evaporators, engines, heaters, boiler pipes, communication equipments, motors, batteries, housing materials, electrode materials, semiconductor, game machines, displays such as OLED devices, mobile phones, home appliances, automobiles, construction, medical equipments, ship, airplane, aerospace equipment, military facilities and equipments, heat exchangers, or the like.

### [Brief Description of Drawings]

FIG. 1 schematically shows a method of measuring heat dissipation properties and configuration of equipments in Examples of the present invention.
FIG. 2 is a graph showing comparison between aluminum (Al) plates coated with heat dissipation paint compositions of Examples 1 and 2 and an Al plate which is not coated of Comparative Example 1 in view of heat dissipation properties.
FIG. 3 shows a defective state of a coating film coated with the heat dissipation paint composition of Comparative Example 2.
FIG. 4 shows evaluation results on surface properties and salt water resistance of coating films coated with the heat dissipation paint compositions of Examples 1 and 2, and Comparative Example 2.
FIG. 5 shows evaluation results on surface properties and salt water resistance of coating films coated with the heat dissipation paint compositions of Example 2, and Comparative Examples 3 and 4.
FIG. 6 schematically shows heat sink structures (various thickness of pin and various pitches) actually applied when confirming heat dissipation performance in various heat sink structures using the heat dissipation paint composition of Example 2.
FIG. 7 is a graph showing evaluation results on heat dissipation performances of FIG. 6.

### [Description of Embodiments]

Hereinafter, preferably exemplary embodiments are described in order to help the understanding of the present invention.

### [Preparation Example 1]

A CNT solution was prepared by mixing 10g of multi-wall carbon nanotube (CNT) with 990g of distilled water. Before the CNT solution was injected into a pre-heater at a flow rate of 30g/min, oxygen in a gas phase which was compressed to 245atm to 252atm was mixed with the CNT solution at a flow rate of 0.8g/min to obtain a mixed solution, and then the mixed solution was injected into a pre-heater which was pre-heated to 200 to 260°C.

The pre-heated mixed solution was injected into a reactor for surface treatment at a temperature of 350°C under subcritical condition at 230atm to 250atm to be surface treated. Ammonia water was high-pressure injected at a flow rate of 0.20g/min under a pressure of 230 to 250atm and at a temperature of 300 to 350°C at a point of 4/5 from an entrance of the reactor for surface treatment during the surface-treatment reaction. The surface-treated product was primarily cooled to 200°C again, and cooled to about 25°C again to obtain 9.8g of a continuously surface-treated product.

### [Preparation Example 2]

A CNT dispersion solution was prepared by mixing and dispersing 30g of the functionalized CNT which was prepared by the same method as Preparation Example 1 above, 90g of a modified polyacrylate-based dispersant with 880g of a mixed solution of methyl ethyl ketone (MEK) and 1-propanol.

### [Preparation Example 3]

46g of an epoxy resin (Kukdo Chemical Co., Ltd., YD 128), 0.2g of a leveling agent, 11.6g of MEK, and 14.6g of 1-propanol were mixed with each other for 10 mins to obtain a mixed solution. 23g of the CNT dispersion solution of Preparation Example 2 was mixed with the mixed solution, followed by blending. Then, 4.6g of 2-ethyl-4-methylimidazole was mixed with the mixed solution, followed by blending for 10 mins again, to thereby prepare a heat dissipation paint composition. Final compositions of the prepared heat dissipation paint composition were shown in Table 1 below.

**[Table 1]**

| | | Composition (g) of Preparation Example 3 (Example 1) |
|---|---|---|
| Polymer Resin | Bisphenol-A Type Epoxy Resin | 46 |
| Dispersion Solution | Aminated CNT dispersion solution (3% by weight in the dispersion solution) | 23 |
| Curing agent | Amine-based (Imidazole-based) Heat Curing agent | 4.6 |
| Leveling Agent | BYK346 | 0.2 |
| Solvent | Alcohol | 26.2 |

### [Example 1]

The heat dissipation paint composition of Preparation Example 3 was used as a composition of Example 1, and the composition was coated on a non-surface treated aluminum specimen having a size of width*length*thickness of 70*70*1 so as to have a thickness of 10µm. A curing process was performed in an oven at 130°C for 30 mins.

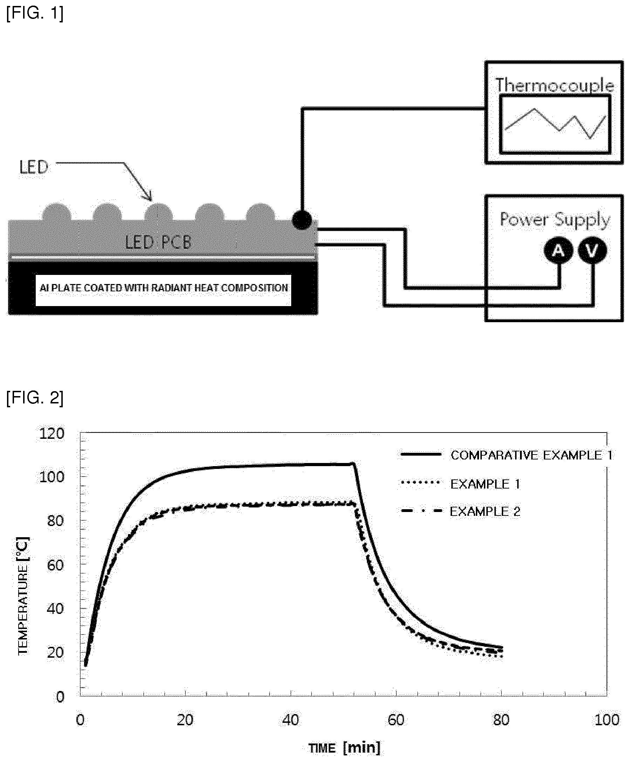

In addition, the aluminum specimen coated with the CNT heat dissipation paint composition was mounted on equipments for measuring a heat dissipation effect. The equipments were schematically shown in FIG. 1, and a thermocouple was attached to a light emitting diode printed circuit board (LED PCB) and a temperature was measured. 20W of an electric power (Watt) was supplied and change in temperatures was observed.

### [Example 2]

A dispersion solution of Example 2 was prepared by the same method as Preparation Example 2 above, except for adding 90g of a modified polyurethane-based dispersant instead of the modified polyacrylate-based dispersant as a dispersion aid, and a heat dissipation paint composition of Example 2 was prepared by the same method as Preparation Example 3.

The heat dissipation effect of the heat dissipation paint composition of Example 2 was evaluated by observing change in temperatures in the heat dissipation paint composition of Example 2 by the same method as Example 1.

### [Comparative Example 1]

The heat dissipation effect was evaluated by measuring change in temperatures by the same method as Example 1, except for using a non-coated (bare) aluminum specimen.

### [Comparative Example 2]

46g of an epoxy resin, 0.2g of a leveling agent, 12.6g of MEK, and 15.9g of 1-propanol were mixed with each other, and mixed for 10 mins. 23g of a non-functionalized CNT dispersion solution was mixed with the mixed solution, followed by blending, and 2.3g of 2-ethyl-4-methylimidazole was added thereto and mixed again for 10 mins. Then, a heat dissipation paint composition of Comparative Example 2 was prepared by the same method as Preparation Example 3.

The heat dissipation effect of the prepared heat dissipation paint composition of Comparative Example 2 was evaluated by observing change in temperatures in the heat dissipation paint composition of Comparative Example 2 by the same method as Example 1.

### [Comparative Example 3]

A dispersion solution was prepared by adding 90g of a modified polyacrylate-based dispersant and 4g of 2,5,8,11-tetramethyl-6-dodecyn-5,8-diol ethoxylate which was a non-ionic fluorinated additive as a dispersion stabilizer to 30g of the functionalized CNT which was prepared by the same method as Preparation Example 1, followed by mixing with 876g of distilled water.

A heat dissipation paint composition of Comparative Example 3 was prepared by mixing 50.0g of the CNT dispersion solution, 2.0g of a 3-aminopropyltriethoxysilane-based binder, 13.3g of a silane-based leveling agent, and 34.7g of distilled water.

The heat dissipation effect of the heat dissipation paint composition of Comparative Example 3 was evaluated by observing change in temperatures in the heat dissipation paint composition of Comparative Example 3 by the same method as Example 1.

### [Comparative Example 4]

A CNT dispersion solution of Comparative Example 4 was prepared by the same method as Comparative Example 3, and a heat dissipation paint composition of Comparative Example 4 was prepared by mixing 66g of the CNT dispersion solution with 24g of a mixed solution of a water-based modified acrylic urethane-based binder and a copolymerized urethane binder, 8g of a silicon-based binder, 0.1g of a silane-based leveling agent, and 1.9g of isopropyl alcohol.

The heat dissipation effect of the heat dissipation paint composition of Comparative Example 4 was evaluated by observing change in temperatures in the heat dissipation paint composition of Comparative Example 4 by the same method as Example 1.

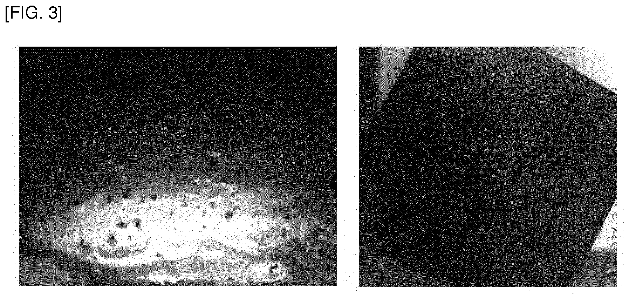

Graphs regarding the heat dissipation properties measured in Examples 1 and 2 and Comparative Example 1 were shown in FIG. 2. It could be confirmed from FIG. 2 that excellent heat dissipation property was shown in the heat dissipation layer formed from the heat dissipation paint composition according to Examples of the present invention. However, in Comparative Example 2, the coating film was defective and nozzle clogging was frequently observed at the time of spray coating, and therefore, evaluation for the heat dissipation property was not possible. These problems observed in Comparative Example 2 could be confirmed in FIG. 3.

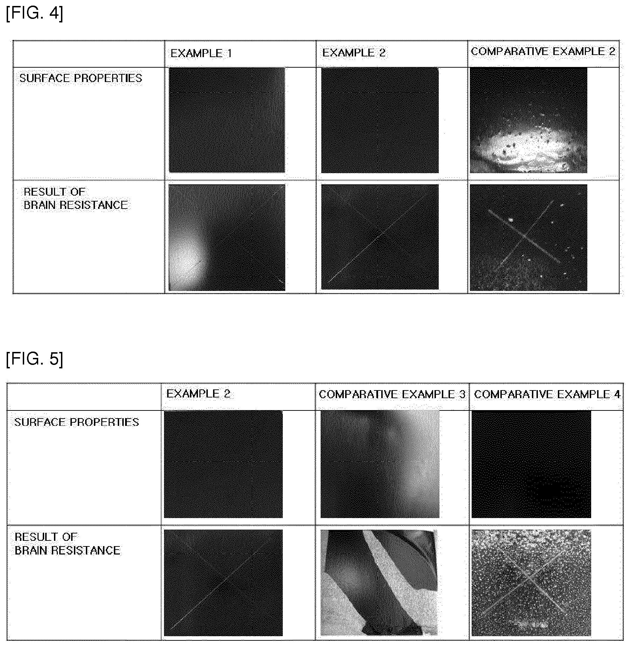

Meanwhile, paint stability and surface properties of the coating films, adherence property (JIS D0202; <M2.5), salt water resistance (240hr, about 30°C, 5% salt water concentration; ASTM B117), pencil hardness, and scratch resistance (ASTM D 3363-92a) of the heat dissipation layer were evaluated in specimens obtained from Examples 1 and 2, and Comparative Examples 1 and 2, respectively. The evaluation results on surface properties of the coating films and the salt water resistance of Examples 1 and 2, and Comparative Example 2 were compared with each other and shown in FIG. 4, and the results obtained by measuring each property were also shown in Tables 2 and 3 below.

Surface properties, adherence property, and salt water resistance were evaluated by the following evaluation standards, and the results were shown in Tables 2 and 3 below.

### * Evaluation Standard

Surface Properties: Evaluation with unaided eye (determined by visual inspection using images such as FIG. 4)

Adherence property: Adherent properties were classified into six stages from 5B indicating excellent adherence property to 0B indicating poor adherence property, according to ASTM D 3359, and determined on the basis of quantitative inspection, and the results were shown in Table 2, and the like.

Salt water resistance: A degree in which a coated surface was salified at a specific time was evaluated with unaided eye and determined according to ASTM standard (determined by visual inspection using images such as FIG. 4).

**[Table 2]**

| Evaluation Items for Comparison | Example 1 | Example 2 | Comparative Example 1 [Natural Al plate] | Comparative Example 2 |
|---|---|---|---|---|
| Paint Stability | 1 day | 1 month | - | Defective (Defective in Dispersibility) |
| Surface Property | Excellent | Excellent | - | Defective |
| Pencil Hardness | 2H | 2H | - | HB |
| Adherence property | 5B | 5B | - | 1B |
| Salt water resistance | 240hr | 240hr | 1hr | 6hr |

**[Table 3]**

| | Example 1 | Example 2 | Comparative Example 1 | Comparative Example 2 |
|---|---|---|---|---|
| T_{max.}[°C] (Maximum Temperature) | 87.4 | 87.3 | 105.5 | - |
| △T[°C] (Natural Al plate - CNT Coating Heat dissipation Paint) | 18.1 | 18.2 | 0 | - |

Referring to Tables 2 and 3, and FIG. 4, it was confirmed that the specimens of Examples had excellent hardness, salt water resistance, adherence property, surface properties, and the like, of the heat dissipation layer, and it was also confirmed that dispersion stability of the paint was more excellent.

Meanwhile, the comparison results in view of the heat dissipation property measured in Example 2 and Comparative Examples 3 and 4 were shown in Table 4 below. In addition, the comparison results in view of the paint stability and the surface properties, and the adherence property (JIS D0202; <M2.5), salt water resistance (240hr, about 30°C, 5% salt water concentration; ASTM B117), pencil hardness, and scratch resistance (ASTM D 3363-92a) of the heat dissipation layer were shown in Table 4 below, and the evaluation results on the coating film surface properties and salt water resistance of Example 2, and Comparative Examples 3 and 4 were compared with each other and the comparison results were shown in FIG. 5.

It was confirmed that the Example 2, and Comparative Examples 3 and 4 had similar heat dissipation effect to each other; however, the salt water resistance was obtained in Example 2 only.

**[Table 4]**

| Evaluation Items for Comparison | Example 2 | Comparative Example 4 | Comparative Example 5 |
|---|---|---|---|
| △T[°C] (Natural Al plate - CNT Coating Heat dissipation Paint) | 18.2 | 17.2 | 17.0 |
| Paint Stability | 1 month | 1 day | 1 month |
| Surface Properties | Excellent | Excellent | Excellent |
| Pencil Hardness | 2H | B | HB |
| Adherence property | 5B | 1B | 5B |
| Salt water resistance | 240hr | 2hr | 4hr |

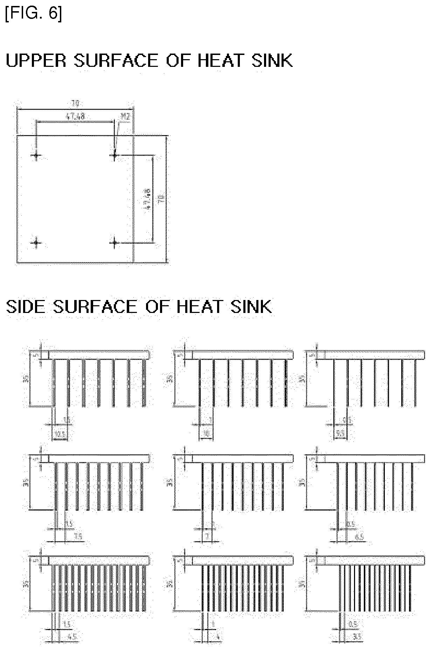

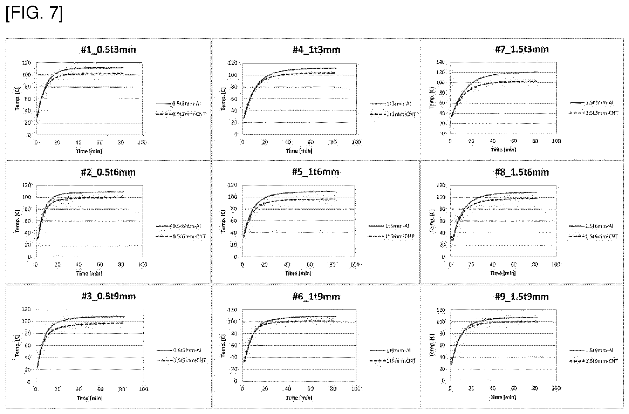

Lastly, heat dissipation performance was confirmed by applying the heat dissipation paint composition of Example 2 to various heat sink structures. More specifically, in the heat sink structure shown in FIG. 6, the heat dissipation performance was confirmed by variously changing thickness and pitch of pins, and the evaluation results were summarized in Table 5 below and FIG. 7. Referring to Table 5 below and FIG. 7, it could be confirmed that when using the heat dissipation paint composition of Examples, excellent heat dissipation effect was obtained in various heat sink structures, and the most excellent heat dissipation effect was obtained by optimum design in which the pin had a thickness of 1 mm and a pitch of 6mm.

**[Table 5]**

| | Thickness of Pin [mm] | Pitch (Pitch: Interval between Pins) [mm] | Area [m²] | Tmax(AI) [°C] | Tmax(CNT) [°C] | Heat dissipation Effect △T [°C] |
|---|---|---|---|---|---|---|
| 1 | 0.5 | 3 | 697.5 | 111.7 | 102.3 | 9.4 |
| 2 | 0.5 | 6 | 443.7 | 108.8 | 99.5 | 9.3 |
| 3 | 0.5 | 9 | 359.1 | 107.8 | 97 | 10.8 |
| 4 | 1 | 3 | 702 | 111.7 | 103.5 | 8.2 |
| 5 | 1 | 6 | 446.4 | 109.3 | 96.6 | 12.7 |
| 6 | 1 | 9 | 361.2 | 108.7 | 101.2 | 7.5 |
| 7 | 1.5 | 3 | 706.5 | 121 | 103.1 | 17.9 |
| 8 | 1.5 | 6 | 449.1 | 108.7 | 98 | 10.7 |
| 9 | 1.5 | 9 | 363.3 | 107.1 | 100.3 | 6.8 |

## Claims

1. A heat dissipation paint composition comprising:
an epoxy resin;
a curing agent;
a carbon-based filler having a functional group including at least one selected from the group consisting of an amine group, an amide group, a carboxyl group and a hydroxyl group bound thereto; and
a solvent,
wherein the carbon-based filler includes at least one selected from the group consisting of a single wall carbon nanotube, a double wall carbon nanotube, a multi-wall carbon nanotube, graphene, graphene oxide, a graphene nano plate, graphite, carbon black, and a carbon-metal complex.

2. The heat dissipation paint composition of claim 1, wherein the functional group is bound directly or via C₁ to C₂₀ alkylene, onto a surface of the carbon-based filler.

3. The heat dissipation paint composition of claim 1, wherein the carbon-based filler is represented by Chemical Formula 1 below: 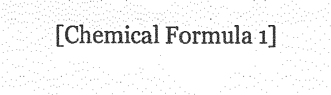 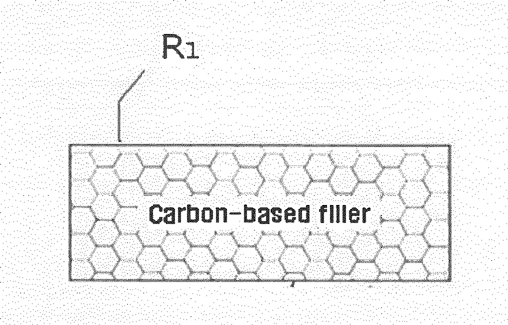 in Chemical Formula 1,
R₁ is at least one functional group bound to the carbon-based filler, is the same as each other or different from each other, and is selected from the group consisting of - R₂-NHR₃, -R₂-C(=O)-NHR₃, -R₂-C(=O)-OH, -R₂-OH, and -R₂-NH-C(=O)R₃,
R2 is the same as each other or different from each other, and is a single bond or C₁ to C₂₀ alkylene, and
R₃ is the same as each other or different from each other, and is hydrogen or C₁ to C₂₀ alkyl.

4. The heat dissipation paint composition of claim 1, wherein the solvent includes at least one selected from the group consisting of water, an alcohol-based solvent, a ketone-based solvent, an amine-based solvent, an ester-based solvent, an amide-based solvent, a halogenated hydrocarbon-based solvent, an ether-based solvent, and a furan-based solvent.

5. The heat dissipation paint composition of claim 1, wherein the epoxy resin has an amount of 5 to 50 wt%;
the curing agent has an amount of 0.1 to 20 wt%;
the carbon-based filler having a functional group including at least one selected from the group consisting of an amine group, an amide group, a carboxyl group and a hydroxyl group bound thereto has an amount of 0.05 to 5 wt%; and
the solvent has a residual amount.

6. The heat dissipation paint composition of claim 1, further comprising:
at least one additive selected from the group consisting of a dispersant, a leveling agent, a dispersion aid, a pH adjusting agent, an anti-precipitation agent, a surfactant, a wetting agent, and a thickener.

7. The heat dissipation paint composition of claim 1, wherein the curing agent includes imidazole-based curing agent having a sturcture of polyamide, amide amine, modified aliphatic amine, modified cycloaliphatic amine or modified aromatic amine.

8. A heat dissipation structure comprising:
an epoxy resin cured material having a cross-linked structure by a ring-opened epoxy group; and
a carbon-based filler having a functional group including at least one selected from the group consisting of an amine group, an amide group, a carboxyl group and a hydroxyl group bound thereto,
wherein the carbon-based filler includes at least one selected from the group consisting of a single wall carbon nanotube, a double wall carbon nanotube, a multi-wall carbon nanotube, graphene, graphene oxide, a graphene nano plate, graphite, carbon black, and a carbon-metal complex.

9. The heat dissipation structure of claim 8, wherein the carbon-based filler is dispersed in the epoxy resin cured material.

10. The heat dissipation paint structure of claim 8, wherein a hydrogen bond is formed between the functional group bound to the carbon-based filler and oxygen derived from the epoxy group.

11. The heat dissipation structure of claim 8, wherein it is formed on a plastic substrate, a metal substrate, or a fiber substrate.

12. The heat dissipation structure of claim 8, wherein it is used to provide a heat dissipation layer in LED lamps, condensers, evaporators, engines, heaters, boiler pipes, communication equipments, motors, batteries, housing materials, electrode materials, semiconductor, game machines, displays, mobile phones, home appliances, automobiles, construction, medical equipments, ship, airplane, aerospace equipments, military facilities and equipment, or heat exchangers.

## Patentansprüche

1. Wärmeabgabeanstrich-Zusammensetzung, umfassend:
ein Epoxidharz;
einen Härter;
einen Füllstoff auf Kohlenstoffbasis mit einer funktionellen Gruppe, enthaltend wenigstens eine ausgewählt aus der Gruppe bestehend aus einer Amingruppe, einer Amidgruppe, einer Carboxygruppe und einer Hydroxygruppe, die daran gebunden ist; und
ein Lösungsmittel,
wobei der Füllstoff auf Kohlenstoffbasis wenigstens einen ausgewählt aus der Gruppe bestehend aus einem einwandigen Kohlenstoff-Nanoröhrchen, einem doppelwandigen Kohlenstoff-Nanoröhrchen, einem mehrwandigen Kohlenstoff-Nanoröhrchen, Graphen, Graphenoxid, einer Graphen-Nanoplatte, Graphit, Ruß und einem Kohlenstoff-Metall-Komplex enthält.

2. Wärmeabgabeanstrich-Zusammensetzung gemäß Anspruch 1, wobei die funktionelle Gruppe direkt oder über ein C1- bis C20-Alkylen auf eine Oberfläche des Füllstoffs auf Kohlenstoffbasis gebunden ist.

3. Wärmeabgabeanstrich-Zusammensetzung gemäß Anspruch 1, wobei der Füllstoff auf Kohlenstoffbasis durch die nachstehende chemische Formel 1 dargestellt wird: 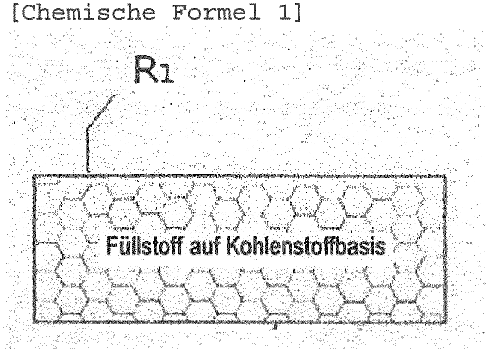 wobei in der chemischen Formel 1
R₁ wenigstens eine an den Füllstoff auf Kohlenstoffbasis gebundene funktionelle Gruppe ist, die jeweils gleich oder voneinander verschieden ist und ausgewählt ist aus der Gruppe bestehend aus -R₂-NHR₃, -R₂-C(=O) -NHR₃, -R₂-C(=O)-OH, -R₂-OH und -R₂-NH-C(=O)R₃,
R₂ jeweils gleich oder voneinander verschieden ist und eine Einfachbindung oder C1- bis C20-Alkylen ist, und
R₃ jeweils gleich oder voneinander verschieden ist und Wasserstoff oder C1- bis C20-Alkyl ist.

4. Wärmeabgabeanstrich-Zusammensetzung gemäß Anspruch 1, wobei das Lösungsmittel wenigstens eines ausgewählt aus der Gruppe bestehend aus Wasser, einem Lösungsmittel auf Alkoholbasis, einem Lösungsmittel auf Ketonbasis, einem Lösungsmittel auf Aminbasis, einem Lösungsmittel auf Esterbasis, einem Lösungsmittel auf Amidbasis, einem Lösungsmittel auf der Basis von halogeniertem Kohlenwasserstoff, einem Lösungsmittel auf Etherbasis und einem Lösungsmittel auf Furanbasis enthält.

5. Wärmeabgabeanstrich-Zusammensetzung gemäß Anspruch 1, wobei das Epoxidharz eine Menge von 5 bis 50 Gew.-% aufweist;
der Härter eine Menge von 0,1 bis 20 Gew.-% aufweist;
der Füllstoff auf Kohlenwasserstoffbasis, der eine funktionelle Gruppe aufweist, die wenigstens eine ausgewählt aus der Gruppe bestehend aus einer Amingruppe, einer Amidgruppe, einer Carboxygruppe und einer Hydroxygruppe, die daran gebunden ist, enthält, eine Menge von 0,05 bis 5 Gew.-% aufweist; und
das Lösungsmittel die restliche Menge aufweist.

6. Wärmeabgabeanstrich-Zusammensetzung gemäß Anspruch 1, ferner umfassend:
wenigstens einen Zusatzstoff ausgewählt aus der Gruppe bestehend aus einem Dispergiermittel, einem Verlaufmittel, einem Dispergierhilfsmittel, einem pH-Wert-Einstellungsmittel, einem Antipräzipitationsmittel, einem grenzflächenaktiven Mittel, einem Netzmittel und einem Verdickungsmittel.

7. Wärmeabgabeanstrich-Zusammensetzung gemäß Anspruch 1, wobei der Härter einen Härter auf Imidazolbasis mit einer Struktur von Polyamid, Amidamin, modifiziertem aliphatischem Amin, modifiziertem cycloaliphatischem Amin oder modifiziertem aromatischem Amin enthält.

8. Wärmeabgabestruktur, umfassend:
ein gehärtetes Epoxidharzmaterial mit einer durch eine ringgeöffnete Epoxidgruppe vernetzten Struktur; und
einen Füllstoff auf Kohlenstoffbasis mit einer funktionellen Gruppe, enthaltend wenigstens eine ausgewählt aus der Gruppe bestehend aus einer Amingruppe, einer Amidgruppe, einer Carboxygruppe und einer Hydroxygruppe, die daran gebunden ist;
wobei der Füllstoff auf Kohlenstoffbasis wenigstens einen ausgewählt aus der Gruppe bestehend aus einem einwandigen Kohlenstoff-Nanoröhrchen, einem doppelwandigen Kohlenstoff-Nanoröhrchen, einem mehrwandigen Kohlenstoff-Nanoröhrchen, Graphen, Graphenoxid, einer Graphen-Nanoplatte, Graphit, Ruß und einem Kohlenstoff-Metall-Komplex umfasst.

9. Wärmeabgabestruktur gemäß Anspruch 8, wobei der Füllstoff auf Kohlenstoffbasis in dem gehärteten Epoxidharzmaterial dispergiert ist.

10. Wärmeabgabeanstrichstruktur gemäß Anspruch 8, wobei zwischen der an den Füllstoff auf Kohlenstoffbasis gebundenen funktionellen Gruppe und dem aus der Epoxidgruppe abgeleiteten Sauerstoff eine Wasserstoffbrücke gebildet ist.

11. Wärmeabgabestruktur gemäß Anspruch 8, die auf einem Kunststoffsubstrat, einem Metallsubstrat oder einem Fasersubstrat gebildet ist.

12. Wärmeabgabestruktur gemäß Anspruch 8, wobei sie verwendet wird zur Bereitstellung einer Wärmeabgabeschicht in LED-Lampen, Kondensatoren, Verdampfern, Maschinen, Heizvorrichtungen, Heizkesselrohren, Kommunikationsvorrichtungen, Motoren, Batterien, Gehäusematerialien, Elektrodenmaterialien, Halbleitern, Spielautomaten, Anzeigen, Mobiltelefonen, Haushaltsgeräten, Automobilen, Bauwerken, medizinischen Vorrichtungen, Schiffen, Flugzeugen, Luftfahrtvorrichtungen, militärischen Einrichtungen und Vorrichtungen, oder Wärmetauschern.

## Revendications

1. Composition de peinture de dissipation thermique comprenant :
une résine époxy ;
un agent durcisseur ;
une charge à base de carbone à laquelle est lié un groupe fonctionnel en comprenant au moins un choisi dans le groupe constitué par un groupe amine, un groupe amide, un groupe carboxyle et un groupe hydroxyle ; et
un solvant,
dans laquelle la charge à base de carbone en comprend au moins une choisie dans le groupe constitué par un nanotube de carbone monofeuillet, un nanotube de carbone bifeuillet, un nanotube de carbone multifeuillet, le graphène, l'oxyde de graphène, une nanoplaquette de graphène, le graphite, le noir de carbone et un complexe de carbone-métal.

2. Composition de peinture de dissipation thermique selon la revendication 1, dans laquelle le groupe fonctionnel est lié directement ou par l'intermédiaire d'un groupe alkylène en C₁ à C₂₀, sur une surface de la charge à base de carbone.

3. Composition de peinture de dissipation thermique selon la revendication 1, dans laquelle la charge à base de carbone est représentée par la formule chimique 1 ci-dessous : 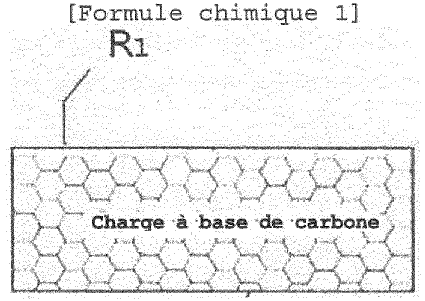 dans la formule chimique 1,
les R₁ sont chacun au moins un groupe fonctionnel lié à la charge à base de carbone, sont identiques les uns aux autres ou différents les uns des autres et sont choisis dans le groupe constitué par -R₂-NHR₃, -R₂-C(=O)-NHR₃, -R₂-C(=O)-OH, -R₂-OH et -R₂-NH-C(=O)R₃ ,
les R₂ sont identiques les uns aux autres ou différents les uns des autres et sont chacun une liaison simple ou un groupe alkylène en C₁ à C₂₀, et
les R₃ sont identiques les uns aux autres ou différents les uns des autres et sont chacun l'atome d'hydrogène ou alkyle en C₁ à C₂₀.

4. Composition de peinture de dissipation thermique selon la revendication 1, dans laquelle le solvant en comprend au moins un choisi dans le groupe constitué par l'eau, un solvant à base d'alcool, un solvant à base de cétone, un solvant à base d'aminé, un solvant à base d'ester, un solvant à base d'amide, un solvant à base d'hydrocarbure halogéné, un solvant à base d'éther et un solvant à base de furane.

5. Composition de peinture de dissipation thermique selon la revendication 1, dans laquelle
la résine époxy représente une quantité de 5 à 50 % en poids ;
l'agent durcisseur représente une quantité de 0,1 à 20 % en poids ;
la charge à base de carbone à laquelle est lié un groupe fonctionnel en comprenant au moins un choisi dans le groupe constitué par un groupe amine, un groupe amide, un groupe carboxyle et un groupe hydroxyle représente une quantité de 0,05 à 5 % en poids ; et
le solvant représente la quantité restante.

6. Composition de peinture de dissipation thermique selon la revendication 1, comprenant en outre :
au moins un additif choisi dans le groupe constitué par un dispersant, un agent d'étalement, un adjuvant de dispersion, un agent d'ajustement du pH, un agent anti-précipitation, un tensioactif, un agent mouillant et un épaississant.

7. Composition de peinture de dissipation thermique selon la revendication 1, dans laquelle l'agent durcisseur comprend un agent durcisseur à base d'imidazole ayant une structure de polyamide, d'aminé d'amide, d'aminé aliphatique modifiée, d'aminé cycloaliphatique modifiée ou d'aminé aromatique modifiée.

8. Structure de dissipation thermique comprenant :
un matériau durci de résine époxy ayant une structure réticulée par un groupe époxy ayant subi une ouverture de cycle ; et
une charge à base de carbone à laquelle est lié un groupe fonctionnel en comprenant au moins un choisi dans le groupe constitué par un groupe amine, un groupe amide, un groupe carboxyle et un groupe hydroxyle,
dans laquelle la charge à base de carbone en comprend au moins une choisie dans le groupe constitué par un nanotube de carbone monofeuillet, un nanotube de carbone bifeuillet, un nanotube de carbone multifeuillet, le graphène, l'oxyde de graphène, une nanoplaquette de graphène, le graphite, le noir de carbone et un complexe de carbone-métal.

9. Structure de dissipation thermique selon la revendication 8, dans laquelle la charge à base de carbone est dispersée dans le matériau durci de résine époxy.

10. Structure à peinture de dissipation thermique selon la revendication 8, dans laquelle une liaison hydrogène est formée entre le groupe fonctionnel lié à la charge à base de carbone et l'oxygène issu du groupe époxy.

11. Structure de dissipation thermique selon la revendication 8, laquelle est formée sur un substrat en plastique, un substrat métallique ou un substrat fibreux.

12. Structure de dissipation thermique selon la revendication 8, laquelle est utilisée pour fournir une couche de dissipation thermique dans des lampes à DEL, des condenseurs, des évaporateurs, des moteurs, des dispositifs de chauffage, des tuyaux de chaudière, des appareillages de communication, des propulseurs, des batteries, des matériaux de boîtier, des matériaux d'électrode, un semi-conducteur, des machines de jeu, des écrans, des téléphones mobiles, des appareils ménagers, des automobiles, la construction, des appareillages médicaux, un navire, un avion, des appareillages pour l'aérospatial, des installations et du matériel militaires, ou des échangeurs de chaleur.
